# EUROPEAN PATENT APPLICATION

(11) **EP 2 456 000 A1**
(43) Date of publication of application: **23.05.2012**
(21) Application number: 11189996.9
(22) Date of filing: 21.11.2011
(51) Int. Cl.: H01M 8/02

(54) **Fuel cell module with combined current collector**

(30) Priority: 19.11.2010 KR 20100115664
(71) Applicant: Samsung SDI Co., Ltd., Gyeonggi-do (KR)
(72) Inventor: Kim, Jan-Dee, Gyeonggi-do (KR); Suh, Jun-Won, Gyeonggi-do (KR); Lee, Seung-Tae, Gyeonggi-do (KR); Kweon, Ho-Jin, Gyeonggi-do (KR)
(74) Representative: Mounteney, Simon James

(57) **Abstract**

A fuel cell module having a composite collector includes a hollow, cylindrical unit cell including a first electrode layer, an electrolyte layer, and a second electrode layer arranged in a radial direction of the hollow, cylindrical unit cell; a current collector including a metal material mesh or conducting line located on an outer circumference of the second electrode layer; and a plurality of auxiliary current collectors including ceramic material powders located on a surface of the current collector.

## Description

### BACKGROUND

### 1. Field

The present invention relates to a combined current collector, and more particularly, to a current collecting unit using a combined material.

### 2. Description of Related Art

Fuel cells may vary with the type or kind of electrolyte. The output ranges and use purposes of the fuel cells vary so that a suitable fuel cell may be selected in accordance with a purpose. Among the various types of fuel cells, in a solid oxide fuel cell, the position of electrolyte can be easily controlled and can be fixed such that there is substantially no possibility of exhausting the electrolyte. The solid oxide fuel cell is not easily corroded so that the life of the material is long. Therefore, the solid oxide fuel cell can be used for distributed power generation, in commerce, and in homes.

A current collector is a core component in the manufacture of a solid oxide fuel cell (SOFC) stack. High electric conductivity for electric coupling, chemical stability at cathode and anode environments, compatibility with thermal expansion coefficient with SOFC cell constituent components, mechanical strength processibility for supporting stack if necessary, and an economically feasible price are desirable characteristics for the current collector used for SOFC.

Recently, ceramic and metal based materials have been used in current collectors in SOFCs. The ceramic and metal based materials have remarkable advantages and disadvantages.

### SUMMARY

The present invention is directed toward a current collector structure using metal and ceramic.

The present invention is also directed toward a current collector using a combined material to provide for chemical stability such as oxidation resistance and/or for improvement of current collecting efficiency.

The present invention is also directed toward a unit for improving adhesive force between a current collector and a fuel cell unit cell.

In an embodiment of the present invention, there is provided a fuel cell module including a hollow, cylindrical unit cell including a first electrode layer, an electrolyte layer, and a second electrode layer arranged in a radial direction of the hollow, cylindrical unit cell, a current collector is formed of a metal material mesh or conducting line located on an outer circumference of the second electrode layer and a plurality of auxiliary current collectors include ceramic material powders located on a surface of the current collector.

The auxiliary current collectors may also be located on the outer circumference of the second electrode layer.

Ceramic particles of the ceramic material powders of the auxiliary current collectors are interconnected together to allow electrons to move between them.

The diameter of the current collector may be at 0.5mm or 2mm or between 0.5mm and 2mm.

The current collector may include at least one metal selected from the group including Ag, ferrite base Fe-Cr metal, a Ni-based alloy, and a Cr based alloy.

The auxiliary current collector may include LaCrO₃ based ceramic. The auxiliary current collectors may have a porosity at 30% or 50% or between 30% and 50%.

When the second electrode layer may be a cathode electrode, the auxiliary current collectors may include LaMnO₃ and LaCoO₃ based ceramics. The auxiliary current collectors may have a porosity less than or equal to 50%.

According to another embodiment of the present invention, a method of forming the auxiliary current collectors in the hollow, cylindrical unit cell around which the current collector is wound includes processing ceramic material to form powders, applying the ceramic material powders onto a surface of the current collector, and performing thermal treatment at a temperature at 500°C or 600°C or between 500°C and 600°C to cake the ceramic material powders onto the surface of the current collector.

In the applying the ceramic material powders onto the surface of the current collector, the ceramic material powders is further attached to an outer circumference of the second electrode of the hollow, cylindrical unit cell.

According to aspects of the present invention, oxidation resistance is improved in comparison with the case in which a single metal current collector is used through the combination of a metal current collector with a ceramic material, thereby prolonging the life of the fuel cell.

In addition, according to embodiments of the present invention, because the metal material is used as a main (e.g., primarily) current collecting material, in comparison with the case in which the single ceramic collector is used, the processibility (e.g., ease of processing) of a current collecting structure is improved, a thermal conductivity increases so that the temperature distribution of the stack becomes substantially uniform and that the efficiency of the fuel cell is improved, and electricity conductivity is high so that current collecting efficiency is improved.

That is, according to aspects of the present invention, the metal and the ceramic are concurrently used in a current collector such that it is possible to compensate for the disadvantages that may be generated when a single material (e.g., either metal or ceramic alone) is used and that the advantages of the respective materials are exhibited. Therefore, it is possible to construct a more efficient fuel cell.

In addition, according to aspects of the present invention, a metal current collector is coated with LaMnO₃ and LaCoO₃ based ceramic powder used as the component of the cathode so that ions are evenly distributed on a unit cell surface and so that structural stability is improved.

In addition, a binder may be used for caking auxiliary current collectors and may be removed by evaporation so that the porosity of the auxiliary current collectors may be improved.

At least some of the above and other features of the invention are set out in the claims.

### BRIEF DESCRIPTION OF THE DRAWINGS

The accompanying drawings, together with the description, illustrate embodiments of the present invention and serve to explain the principles of the present invention.

FIG. 1 is a perspective view illustrating a unit cell, on which an embodiment of the present invention is based, and a current collecting structure;

FIG. 2 is a cross sectional view illustrating the unit cell and the current collecting structure of FIG. 1 taken along the center shaft of the unit cell;

FIG. 3 is a perspective view illustrating auxiliary current collectors coated on a metal current collector in accordance with one embodiment of the present invention;

FIG. 4 is a cross sectional view illustrating the unit cell and the current collecting structure of FIG. 3 taken along the center shaft of the unit cell according to one embodiment of the present invention;

FIG. 5 is a perspective view illustrating the auxiliary current collectors coated on the outer circumferences of a metal current collector and a unit cell according to one embodiment of the present invention; and

FIG. 6 is a cross sectional view illustrating the unit cell and the current collecting structure of FIG. 5 taken along the center shaft of the unit cell according to one embodiment of the present invention.

### DETAILED DESCRIPTION

In the following detailed description, only certain embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. In addition, when an element is referred to as being "on" another element, it can be directly on the element or be indirectly on the element with one or more intervening elements interposed therebetween. Also, when an element is referred to as being "connected to" another element, it can be directly connected to the element or be indirectly connected to the element with one or more intervening elements interposed therebetween. Hereinafter, like reference numerals refer to like elements.

Hereinafter, the embodiments of the present invention will be described with reference to the attached drawings. Like members are denoted by like reference numerals.

A comparable fuel cell includes a fuel converter (reformer and reactor) for reforming fuel to supply the reformed fuel and a fuel cell module. Here, the fuel cell module refers to an assembly including a fuel cell stack for converting chemical energy into electrical and thermal energy by an electro-chemical method. For example, the fuel cell module includes a fuel cell stack, a piping system through which fuel, oxide, cooling water, and discharged material move, a wiring line through which electricity generated by the stack moves, a component for controlling or monitoring the stack, and a component for taking corrective measures when the stack is operating abnormally.

According to one embodiment of the present invention, there are provided the structures of a current collector and a unit cell for transmitting electrons generated by the unit cell by an oxidation reaction to be coupled to an external conducting line. Hereinafter, embodiments of the present invention will be described in more detail.

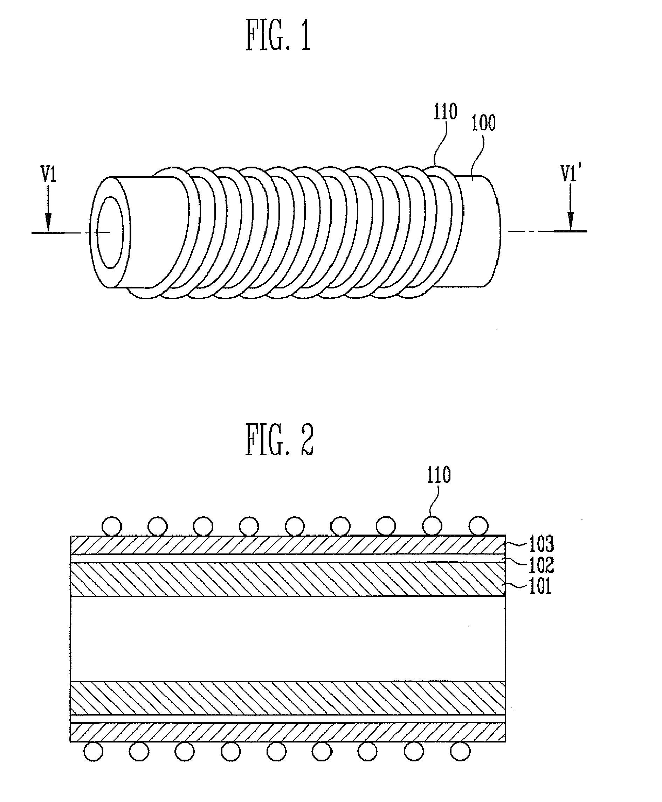

A unit cell 100 is illustrated in FIGS. 1 and 2. FIG. 2 is a sectional view taken along the line V1-V1'.

The unit cell 100 may be formed of a hollow cylinder or a hollow polygonal cylinder as illustrated in FIG. 1. In addition, the unit cell 100 is divided into three layers arranged along a radial direction of the hollow cylinder from a center shaft toward the outside. An inner layer 101 and an outer layer 103 are electrode layers and an electrolyte layer 102 is provided between both electrode layers. Here, in accordance with an intended application, an anode may be formed on the inner layer 101 or a cathode may be formed on the outer layer 103 or, to the contrary, the anode may be formed on the outer layer 103 and the cathode may be formed on the inner layer 101. According to one embodiment of the present invention both cases are included. In addition, if necessary, an intermediate layer may be further provided among the three layers. The intermediate layer may be formed by mixing the components of two adjacent layers and may contribute to the adhesive force and the structural stability of the two layers.

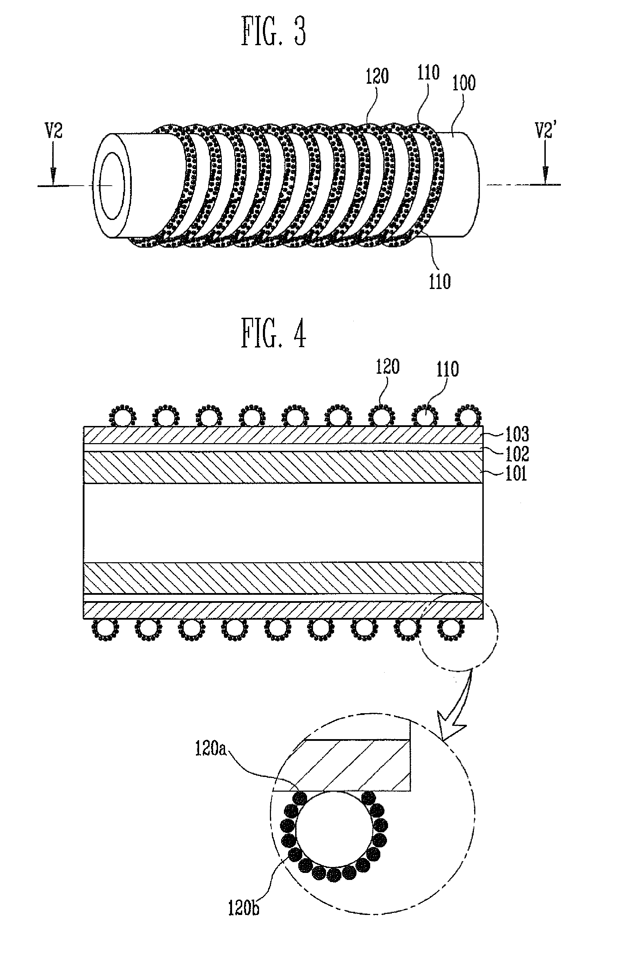

The current collector 110 is formed of a wire to be wound around the outer circumference of the unit cell 100. Because the current collector 110 according to the present invention is mainly formed of metal, the current collector 110 may be provided outside the unit cell in various suitable forms and is not limited to the form of a conducting line according to embodiments of the present invention. That is, the current collector 110 may be formed, for example, of a metal material mesh in embodiments different from the embodiment illustrated in FIG. 3.

In different embodiments of the invention, the materials of the current collector 110 include a ceramic based material and a metal based material. Because the respective materials have different advantages and disadvantages, in general, the material having the characteristics suitable for the intended application is used. Advantages and disadvantages of the materials mainly used as the solid oxide fuel cell (SOFC) current collector 110 are summarized in the following TABLE 1.

**TABLE 1**

| | Ceramic | Metal |
|---|---|---|
| | (for example: LaCrO₃) | (for example: Cr-Fe ferrite SUS) |
| Oxidation resistance | ⊚ No problem | Δ Gradually oxidized and oxide layer formed on the surface |
| Conductivity | Δ Relatively high | Δ High but deteriorated with age |
| Strength | Δ Low strength | o Thin plate may be used |
| Processibility (e.g., ease of processing) | X difficult to perform processing | o Metal processing and press processing may be performed |
| Manufacturing | X High temperature annealing: no less than 1,500°C | o Similar to common SUS |
| Price | X expensive | Δ Relatively low priced |
| Use temperature | High temperature to middle temperature (1,000 to 800°C) | Low temperature (no more than 800°C) |

As illustrated in TABLE 1, a representative material of the ceramic current collector is a LaCrO₃ based compound having a perovskite structure. The material has high electricity conductivity in anode and cathode environments, has a high suitability for a thermal expansion coefficient with cell components, and has high stability and therefore the material is most widely used as the current collector material of a high temperature type SOFC. In accordance with various suitable applications, an alkali earth metal such as Ca or Sr may be added.

The electrical and chemical stability of the ceramic is very high at a high temperature. However, the brittleness of the ceramic is high, the processibility (e.g., ease of processing) of the ceramic is low, and the price of the ceramic is very high.

In comparison with the ceramic current collector, the metal current collector has high thermal conductivity in addition to the other advantages of processibility (e.g., ease of processing) and economic feasibility (e.g., low cost) so that stack temperature distribution is substantially uniform, mechanical strength is high, a gas is not transmitted, and electricity conductivity is high. However, because the metal current collector is used at a high temperature, an oxide is formed on the surface of the metal current collector at the cathode atmosphere of SOFC so that contact resistance rapidly increases, electrodes are contaminated by chemical instability, and cathode activation deteriorates.

In order to combine the advantages of the materials and to compensate for the disadvantages, a composite current collector according to one embodiment of the present invention illustrated in FIGS. 3 and 4 is provided. FIG. 4 is a cross sectional view taken along the line V2-V2'.

According to this embodiment of the present invention, a current collecting structure is divided into a current collector 110 and auxiliary current collectors 120.

The current collector 110 is manufactured by a conductive metal line wound around the outer circumference of the unit cell 100. The diameter of the current collector is preferably from 0.5mm to 2mm. In one embodiment, when the diameter is less than 0.5mm, because the number of times of winding increases during the manufacturing of the current collector 110 and a sectional area for collecting current is small, current that flows per a unit area is large at high current so that current loss caused by the generation of heat (e.g., resistance losses) is large. In another embodiment, when the current collector is manufactured to have a diameter greater than 2mm, the area in comparison to the volume of the current collector 110 is reduced so that current collecting efficiency decreases. Considering workability and current collecting efficiency and the strength of the current collector 110, according to this particular embodiment of the present invention, the diameter of the current collector 110 is about 1 mm.

The auxiliary current collectors 120 are manufactured in the form of ceramic material powders (or powdered ceramic materials). The auxiliary collectors 120 are attached to the surface of the current collector 110 using a binder. Then, thermal treatment is performed at a temperature at 500°C or 600°C or between 500°C and 600°C. During the thermal processing process, the auxiliary current collectors are firmly caked on the surface of the current collector 110 and the binder is removed by evaporation. Because the binder is removed, additional porosity between the particles of the powders of the auxiliary current collectors 120 may be secured. The particles that constitute the auxiliary current collectors 120 are interconnected to allow electrons to move between them.

As illustrated in FIG. 4, the auxiliary current collectors 120 include auxiliary current collectors 120b attached onto (e.g., contacted to only) the current collector 110 and auxiliary current collectors 120a interposed between (e.g., contacted to both) the current collector 110 and a second electrode layer 103 to contact the two surfaces. Among them, the auxiliary current collectors 120a that contact the surfaces of the current collector 110 and the second electrode layer 103 may, in addition to reducing or preventing oxidation, improve current collecting efficiency.

In addition, in the auxiliary current collectors 120 according to this embodiment of the present invention, pores are formed so that fuel and air may be supplied. The porosity of the particles of the ceramic powders may preferably be at 30% or 50% or between 30% and 50%. In one embodiment, when the porosity of the particles of the ceramic powders is less than 30%, because the possibility of oxygen or fuel reaching an electrode layer is reduced, the efficiency of a fuel cell deteriorates. In another embodiment, when the above porosity is greater than 50%, the current collector 110 is easily oxidized.

In addition, because the ceramic powders that constitute the auxiliary current collectors 120 are stably attached onto the surface of the current collector 110, the diameter of the ceramic powder is formed to be between several µm and several hundreds µm and, in one embodiment, may be formed to be no more than 20 µm in diameter to improve current collecting efficiency.

The materials of the current collector 110 and the auxiliary current collectors 120 will be described in more detail.

In the current collector, because only electrons among electrons and ions (e.g., only electrons and not ions) are to be selectively moved to the outside of the unit cell 100, a material having low ion conductivity and high electrical conductivity is used for the current collector. Materials that satisfy such characteristics include a LaCrO₃ based ceramic, Ag, a Ni based alloy, a Cr based alloy, and ferrite based Fe-Cr metal. According to one embodiment, as described above, metal such as Ag, a Ni based alloy, a Cr based alloy, and a ferrite based Fe-Cr metal may be used in the current collector 110 and a LaCrO₃ based ceramic may be used in the auxiliary current collectors 120. In general, an environment in which metals are easily oxidized is present near the cathode so that it is difficult to use a current collector formed of a metal material such as the Ni based alloy or the ferrite based Fe-Cr metal. However, in this embodiment of the present invention, because the auxiliary current collectors 120 reduce or prevent oxidation, the cathode may include the metal material current collector 110.

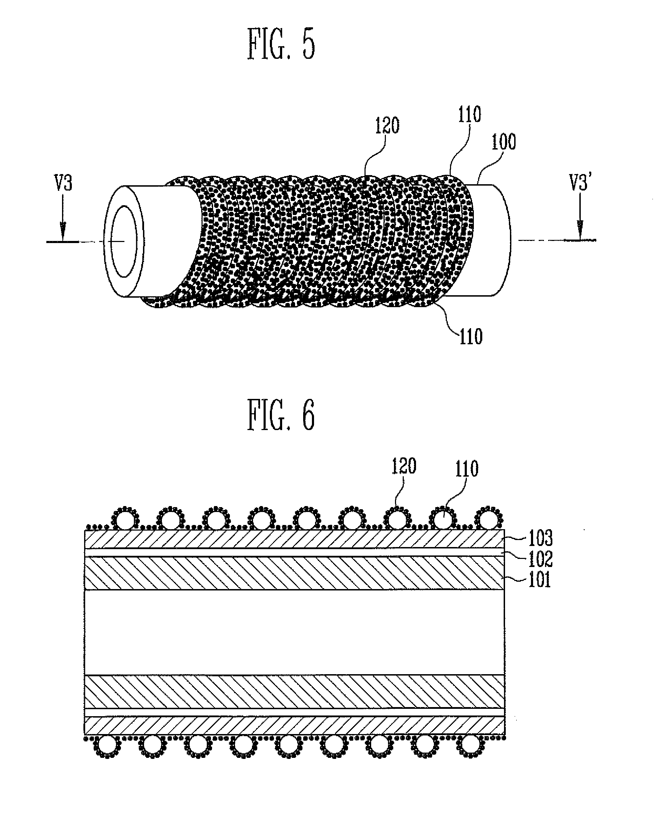

FIGS. 5 and 6 illustrate another embodiment of the present invention. FIG. 6 is a cross sectional view taken along the line V3-V3' of FIG. 5. According to the embodiment of the present invention illustrated in FIGS. 5 and 6, the outer circumference of the unit cell 100 is covered (e.g., substantially or entirely covered) with the auxiliary current collectors 120.

The physical and chemical characteristics of the auxiliary current collectors 120 coated on the external circumference of the unit cell 100 are substantially the same as the auxiliary current collectors 120 of the embodiment illustrated in FIGS. 3 and 4. In order to control the transmittance of the oxygen or the fuel in accordance with the characteristics of the ceramic material, the porosity of the ceramic powders caked on the current collector 110 may be different from the porosity of the particles of the ceramic powders caked on the outer circumference of the unit cell 100.

Due to the characteristics of a fuel cell, selection of the materials of the components may be limited. An anode and a cathode of the fuel cell are generally porous so that a fuel gas and oxygen may be diffused well. In addition, the anode and the cathode generally have high electricity conductivity and high ion conductivity. For example, when the anode is formed of NiO-YSZ, a network on which NiO is reduced to form Ni is a path through which electrons pass and YSZ is a path of ion conductivity. In the case of the current collector, because only electrons among electrons and ions (e.g., only electrons and not ions) are to be moved outside the unit cell 100, the current collector is generally formed of a material having low ion conductivity and high electricity conductivity.

According to this embodiment of the present invention, LaMnO₃ and LaCoO₃ based ceramics that are mainly used as the materials of the cathode are used as the material of the auxiliary current collectors 120. Such LaMnO₃ and LaCoO₃ based ceramics have high ion conductivity that is unsuitable for a single component current collector material. However, in embodiments of the present invention, when the auxiliary current collectors are not directly coupled to an external circuit but perform an auxiliary function of collecting current, such ion conductivity does not affect current collecting efficiency but increases the area of the cathode so that ions may be substantially evenly distributed.

That is, the ceramic material having a similar component as the material of the cathode is used for forming the auxiliary current collectors so that an adhesive force between the current collector and the unit cell may be improved and so that ion conductivity may be improved. In addition, a material similar to the material of the cathode is used so that it is possible to protect or prevent the current collector from being broken by thermal expansion rate.

In addition, in this case, because ion conductivity may be improved in comparison with the case in which LaCrO₃ based ceramic is used and a similar material as the material of the cathode is formed, although the porosity of the ceramic particles may be smaller or no pore is formed, current collecting efficiency similar to the case in which LaCrO₃ based ceramic is used may be obtained. Therefore, the auxiliary current collectors in which LaMnO₃ or LaCoO₃ based ceramic is used may have a porosity less than or equal to 50%.

While the present invention has been described in connection with certain embodiments, it is to be understood that the invention is not limited to the disclosed embodiments, but, on the contrary, is intended to cover various modifications and equivalent arrangements included within the scope of the appended claims and equivalents thereof.

## Claims

1. A fuel cell module comprising:
a hollow, cylindrical unit cell comprising a first electrode layer, an electrolyte layer, and a second electrode layer arranged in a radial direction of the hollow, cylindrical unit cell;
a current collector comprising a metal located on an outer circumference of the second electrode layer; and
a plurality of auxiliary current collectors comprising a ceramic material located on a surface of the current collector.

2. A fuel cell module as claimed in claim 1, wherein the ceramic material comprises ceramic particles that are interconnected together to allow electrons to move between them.

3. A fuel cell module as claimed in claim 1 or 2, wherein the current collector comprises a line having a diameter of from 0.5mm to 2mm.

4. A fuel cell module as claimed in according to any preceding claim, wherein the current collector comprises at least one metal selected from the group consisting of Ag, ferrite base Fe-Cr metal, a Ni-based alloy, and a Cr based alloy.

5. A fuel cell module as claimed in according to any preceding claim, wherein the auxiliary current collectors comprise a LaCrO₃ based ceramic.

6. A fuel cell module as claimed in claim 5, wherein the auxiliary current collectors have a porosity of from 30% to 50%

7. A fuel cell module as claimed in one of claims 1 to 4,
wherein the second electrode layer is a cathode electrode, and
wherein the auxiliary current collectors comprise LaMnO₃ and LaCoO₃ based ceramics.

8. A fuel cell module as claimed in claim 7, wherein the auxiliary current collectors have a porosity less than or equal to 50%.

9. A fuel cell module as claimed in any preceding claim, wherein the auxiliary current collectors are also located on the outer circumference of the second electrode layer.

10. A fuel cell module according to claim 9, wherein the porosity of the auxiliary current collectors located on the outer circumference of the second electrode layer is different from the porosity of the auxiliary current collectors situated on the current collector.

11. A method of forming the auxiliary current collectors as claimed in claim 1 comprising:
processing the ceramic material to form a powder;
applying the ceramic material powder to the surface of the current collector; and
performing thermal treatment at a temperature of from 500°C to 600°C to cake the ceramic material powders onto the surface of the current collector.

12. A method as claimed in claim 11, wherein the ceramic material powder is further applied to an outer circumference of the second electrode.
